# EUROPEAN PATENT APPLICATION

(11) **EP 4 627 916 A1**
(43) Date of publication of application: **08.10.2025**
(21) Application number: 23916184.7
(22) Date of filing: 08.12.2023
(51) Int. Cl.: A01K 61/80

(54) **INFORMATION PROCESSING DEVICE, INFORMATION PROCESSING METHOD, AND INFORMATION PROCESSING PROGRAM**

(30) Priority: 13.01.2023 JP 2023003795
(71) Applicant: Softbank Corp., Tokyo 105-7529 (JP)
(72) Inventor: ISHIWAKA, Yuko, Tokyo 105-7529 (JP)
(74) Representative: SSM Sandmair
(86) International application number: PCT/JP2023/043980
(87) International publication number: WO 2024/150569

(57) **Abstract**

An information processing apparatus includes an acquiring unit that acquires stomach information indicating a size of stomach of fish present in a fish cage, and water temperature information indicating water temperature of the fish cage; and a feeding control unit that generates control information for controlling feeding operation by a feeder device to the fish present in the fish cage based on the stomach information and the water temperature information.

## Description

### Field

The present invention relates to an information processing apparatus, an information processing method, and an information processing program.

### Background

Conventionally, a technique related to a feeding device that is installed in aquaculture facilities, such as a fish cage for raising fish, and that feeds fish in the water has been known. For example, a technique has been known in which artificial intelligence determines whether an activity level of farmed fish is high during the feeding time from an automatic feeder by analysis processing of live video captured by a network camera, and based on this determination, feeding from the automatic feeder is controlled to be adjusted.

### Citation List

### Patent Literature

Japanese Laid-open Patent Publication No. 2020-78278

### Summary

### Technical Problem

However, in the conventional technique described above, because it is only determined whether the activity of farmed fish is high during the feeding time from the automatic feeder based on video captured by a network camera installed on a sea surface aquaculture raft, it does not necessarily optimize feeding by a feeder device.

### Solution to Problem

An information processing apparatus comprising: an acquiring unit that acquires stomach information indicating a size of stomach of fish present in a fish cage, and water temperature information indicating water temperature of the fish cage; and a feeding control unit that generates control information for controlling feeding operation by a feeder device to the fish present in the fish cage based on the stomach information and the water temperature information.

### Advantageous Effects of Invention

According to an aspect of the embodiment, an effect that feeding by a feeder device can be optimized is produced.

### Brief Description of Drawings

FIG. 1 is a diagram illustrating an example of a configuration of an information processing system according to an embodiment.
FIG. 2 is a diagram illustrating an example of a configuration of an information processing apparatus according to the embodiment.
FIG. 3 is a flowchart illustrating an example of information processing by the information processing apparatus according to the embodiment.
FIG. 4 is a flowchart illustrating an example of information processing by an information processing apparatus according to a first modification.
FIG. 5 is a diagram illustrating an example of spectrogram of sounds collected during feeding according to a second modification.
FIG. 6 is a flowchart illustrating an example of information processing by an information processing apparatus according to the second modification.
FIG. 7 is a hardware configuration diagram illustrating an example of a computer that implements functions of the information processing apparatus. Description of Embodiments

Hereinafter, modes (hereinafter, referred to as "embodiments") to implement an information processing apparatus, an information processing method, and an information processing program according to the present application will be explained in detail with reference to the drawings. The embodiments are not intended to limit the information processing apparatus, the information processing method, and the information processing program according to the present application. Moreover, identical reference symbols are assigned to identical components in the respective embodiments below, and duplicate explanation will be omitted.

### Embodiment

### 1. Introduction

Conventionally, it is determined based on video from a camera installed around an automatic feeder (hereinafter, also referred to as feeder device) installed in an aquaculture facility, such as a fish cage, whether the biting behavior of fish to feed is active (a biting level of fish to the feed is high) during feeding time by the feeder device. A technique has been known in which feeding by the feeder device is automatically stopped when it is determined that the biting behavior of fish to the feed is inactive (the biting level of fish to the feed is low). It can be said that good biting of fish to the feed (a high degree of biting) during the feeding time indicates high fish activity during the feeding time, in other words, high feeding activity of the fish. Moreover, it can be said that poor biting of fish to the feed (a low degree of biting) during the feeding time indicates low fish activity during the feeding time, in other words, low feeding activity of the fish.

However, the method of determining the degree of feeding activity of fish from video of a camera installed around the feeder device cannot necessarily be considered high in determination accuracy. For example, there is a case in which water from a fish cage in an aquaculture farm splashes onto a lens of the camera. In this case, water droplets on the lens can make the video of the camera unclear, making it difficult to determine the level of feeding activity of fish accurately. Furthermore, when detecting fish shadows from video of the camera, fish can be completely invisible depending on an angle of sunlight, and shadows of waves can be misidentified as fish. This can cause feeding to be continued even when the fish are not actually eating.

On the other hand, an information processing apparatus according to the embodiment acquire stomach information indicating the size of a stomach of fish present in the fish cage, water temperature information indicating water temperature of the fish cage, and digestibility information indicating a digestion rate of feed provided by the feeder device of fish present in the fish cage. Moreover, the information processing apparatus estimates a time when the fish present in the fish cage become hungry by using a first machine learning model that is trained to output information indicating a time when the fish present in the fish cage become hungry as output information according to input of input information based on the stomach information, the water temperature information, and the digestibility information. Furthermore, the information processing apparatus generates control information that indicates timing for starting feeding operation based on the information indicating the time when the fish present in the fish cage become hungry.

The water temperature of the water cage is estimated to have a correlation with, for example, the activity level of digestive enzymes contained in gastric juice of fish. That is, water temperature of the water cage is estimated to have a correlation, for example, with the feed digestibility. Thus, the information processing apparatus according to the embodiment can accurately estimate the time when the fish present in the fish cage become hungry based on the size of the stomach of the fish, the water temperature of the water cage, and the feed digestibility. Moreover, because the information processing apparatus can accurately estimate the time when the fish present in the fish cage become hungry, it is possible to accurately determine the timing for starting the feeding operation by the feeder device based on the time when the fish present in the fish cage become hungry. Therefore, the information processing apparatus can optimize the feeding by the feeder device.

### 2. Configuration of Information Processing System

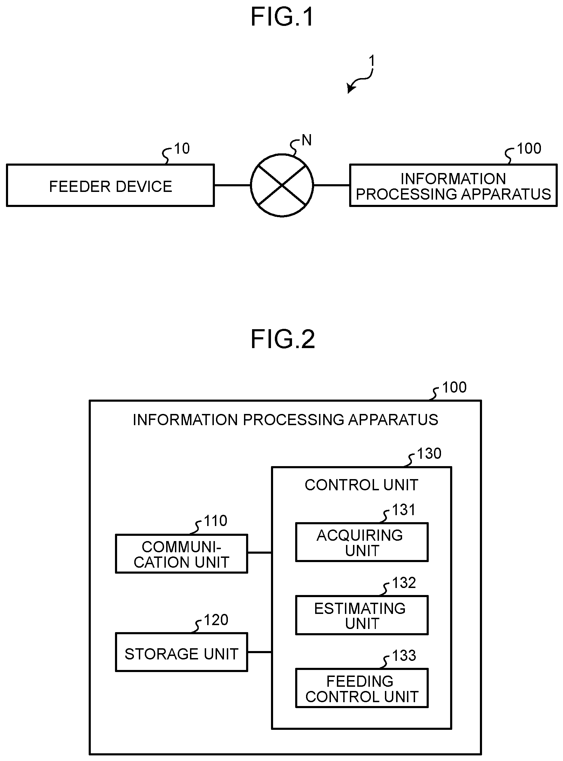

FIG. 1 is a diagram illustrating an example of a configuration of an information processing system 1 according to the embodiment. As illustrated in FIG. 1, the information processing system 1 includes a feeder device 10 and an information processing apparatus 100. The feeder device 10 and the information processing apparatus 100 are connected to enable communication with each other in a wired or wireless manner through a network N. The information processing system 1 illustrated in FIG. 1 may include multiple units of the feeder device 10 or multiple units of the information processing apparatus 100.

The feeder device 10 is a device that is installed in a fish cage (an example of an aquaculture farm), and that feeds fish that is raised in a fish cage. The feeder device 10 is arranged, for example, above a water surface of the fish cage at a position apart from the water surface of the fish cage by a predetermined distance. The feeder device 10 receives control information from the information processing apparatus 100, and feeds according to the received control information.

The information processing apparatus 100 acquires the stomach information indicating the size of the stomach of fish present in a fish cage, and the water temperature information indicating water temperature of the fish cage. Moreover, the information processing apparatus generates the control information to control the feeding operation by the feeder device 10 to the fish present in the fish cage based on the stomach information and the water temperature information. The information processing apparatus 100 transmits, when the control information is generated, the generated control information to the feeder device 10.

### 3. Configuration of Information Processing Apparatus

FIG. 2 is a diagram illustrating an example of a configuration of the information processing apparatus 100 according to the embodiment. As illustrated in FIG. 2, the information processing apparatus 100 includes a communication unit 110, a storage unit 120, and a control unit 130.

### Communication Unit 110

The communication unit 110 is implemented by, for example, a network interface card (NIC), and the like. The communication unit 110 is a communication interface that is connected to the feeder device 10 through the network N in a wired or wireless manner, and controls communication with the feeder device 10.

### Storage Unit 120

The storage unit 120 is implemented by, for example, a semiconductor device, such as a random access memory (RAM) and a flash memory, or a storage device, such as a hard disk and an optical disk. The storage unit 120 stores a computer program (an example of an information processing program) executed by the control unit 30, or data that is processed by the control unit 130.

### Control Unit 130

The control unit 130 is a controller, and is implemented by a central processing unit (CPU), a micro processing unit (MPU), an application specific integrated circuit (ASIC), a field programmable gate array (FPGA), and the like executing various kinds of programs (corresponding to one example of the information processing program) stored in a storage device inside the information processing apparatus 100 using a storage area, such as RAM, as a work area. In the example illustrated in FIG. 2, the control unit 130 includes an acquiring unit 131, an estimating unit 132, and a feeding control unit 133. The internal configuration of the control unit 130 is not limited to the configuration illustrated in FIG. 2, and may be other configurations as long as it is configured to perform information processing described later. Moreover, the respective functional units only represent functions of the control unit 130, and is not necessarily configured to be physically distinguished.

### Acquiring Unit 131

The acquiring unit 131 acquires the stomach information indicating the size of the stomach of fish present in a fish cage. Specifically, the size of the stomach of fish vary depending on a fish species. Moreover, the size of the stomach of fish varies according to an oblique tail length (one example of the size of fish). The size of the stomach refers to a volume of the stomach, and may be measured in milliliters. The storage unit 120 stores stomach dictionary information in which the stomach information indicating the size of the stomach of fish of each fish species and oblique tail length and the fish species and the oblique tail length. Moreover, the fish species and the oblique tail length of fish (for example, an average oblique tail length) present in a target fish cage are assumed to be known. The acquiring unit 131 acquires the stomach information indicating the size of the stomach of fish corresponding to the fish species and the oblique tail length of the fish present in the target fish cage by referring to the stomach dictionary information in the storage unit 120.

Moreover, the acquiring unit 131 acquires the water temperature information indicating water temperature of the fish cage. Specifically, the acquiring unit 131 acquires the water temperature information that indicates the water temperature of the fish cage from a water temperature sensor installed in the water in the fish cage. The water temperature of the fish cage is estimated to have a correlation with an amount of activity of fish (for example, feeding activity). For example, it is estimated that the lower the water temperature of the fish cage is, the lower the amount of activity (for example, feeding activity) of the fish is, and the higher the water temperature is, the larger the amount of activity (for example, feeding activity) of the fish is. That is, it is estimated that the fish eat more feed in a predetermined period of time when the water temperature is high, compared to a case in which the water temperature of the fish cage is low. Moreover, the water temperature of the fish cage is estimated to have a correlation with the level of activity of digestive enzymes contained in the gastric juice of the fish. For example, it is estimated that the lower the water temperature of the fish cage is, the lower the level of activity of digestive enzymes contained in the gastric juice of the fish is, and the higher the water temperature is, the larger the level of activity of digestive enzymes contained in the gastric juice of the fish is. That is, it is estimated that the fish have a high ability to digest feed when the water temperature of the fish cage is high, compared to a case in which the water temperature of the fish cage is low. That is, the fish are estimated to be hungry in shorter time when the water temperature is high compared to the case in which the water temperature is low.

Furthermore, the acquiring unit 131 acquires the digestibility information indicating the digestion rate of feed provided by the feeder device 10 by fish present in the fish cage. Specifically, the digestion rate of feed varies according to a type of digestive enzyme contained in the gastric juice of fish and a type of feed. The digestion rate of feed may refer to an amount of feed digested per unit time. The storage unit 120 stores digestion dictionary information in which the digestibility information indicating the digestion rate of feed by type of digestive enzyme contained in the gastric juice of fish and by type of feed and the type of digestive enzyme contained in the gastric juice of fish and the type of feed are associated with each other. Moreover, the type of digestive enzyme contained in the gastric juice of the fish present in the target fish cage and the type of feed provided by the feeder device 10 are assumed to be known. The acquiring unit 131 refers to the digestion dictionary information in the storage unit 120, and acquires the digestibility information indicating the digestion rate of feed corresponding to the type of digestive enzyme contained in the gastric juice of the fish in the target fish cage and the type of feed provided by the feeder device 10.

### Estimating Unit 132

The estimating unit 132 estimates a time when the fish present in the fish cage become hungry. Specifically, the estimating unit 132 trains the first machine learning model using a set of the stomach information, the water temperature information, and the digestibility information, and the information indicating the time when the fish present in the fish cage become hungry (for example, two hours later from the start time of first feeding operation by the feeder device 10, or the like) as ground truth data. More specifically, the estimating unit 132 trains the first machine learning model to output information indicating the time when the fish present in the fish cage become hungry as output information, according to input of the input information based on the stomach information, the water temperature information, and the digestibility information. Subsequently, the estimating unit 132 inputs the stomach information, the water temperature information, and the digestibility information acquired by the acquiring unit 131 to the trained first machine learning model, and acquires the time when the fish present in the fish cage become hungry output from the trained first machine learning model as an estimation result.

### Feeding Control Unit 133

The feeding control unit 133 generates the control information indicating timing for starting the feeding operation by the feeder device 10 based on the information indicating the time when the fish present in the fish cage become hungry estimated by the estimating unit 132. For example, suppose that the time when the fish present in the fish cage become hungry estimated by the estimating unit 132 is two hours after the start time of the first feeding operation by the feeder device 10. In this case, the feeding control unit 133 generates the control information for instructing to start second feeding operation by the feeder device 10 after two hours since the start time of the first feeding operation by the feeder device 10, as the control information indicating timing for starting the feeding operation. The feeding control unit 133 transmits, when the control information is generated, the generated control information to the feeder device 10.

As described, the feeding control unit 133 generates the control information to control the feeding operation by the feeder device 10 to the fish present in the fish cage based on the stomach information and the water temperature information acquired by the acquiring unit 131.

### 4. Processing Procedure

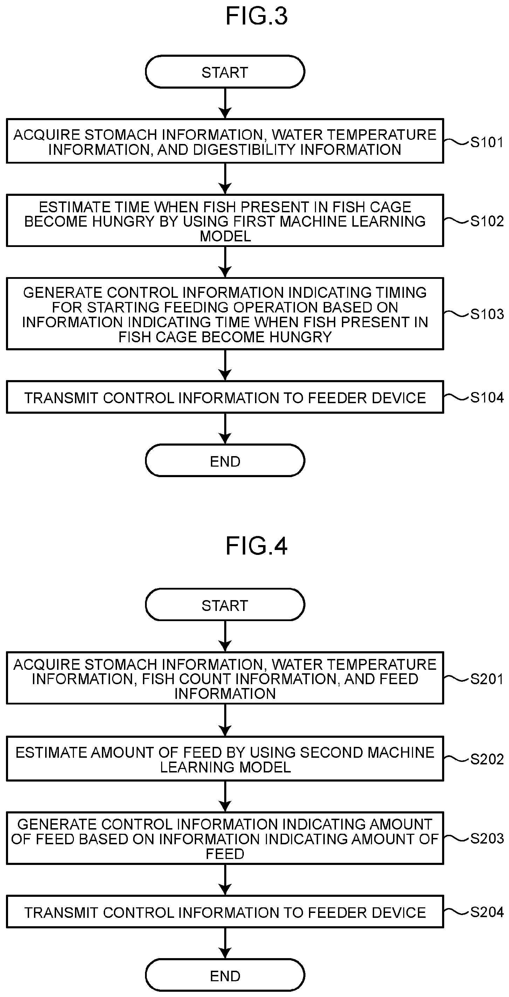

FIG. 3 is a flowchart illustrating an example of information processing by the information processing apparatus 100 according to the embodiment. In the example in FIG. 3, the acquiring unit 131 acquires the stomach information, the water temperature information, and the digestibility information (step S101). Moreover, the estimating unit 132 estimates the time when the fish present in the fish cage become hungry from the stomach information, the water temperature information, and the digestibility information acquired by the acquiring unit 131 by using the first machine learning model (step S102). Furthermore, the feeding control unit 133 generates the control information indicating the timing for starting the feeding operation by the feeder device 10 based on the information indicating the time when the fish present in the fish cage become hungry estimated by the estimating unit 132 (step S103). Subsequently, the feeding control unit 133 transmits, when the control information is generated, the generated control information to the feeder device 10 (step S104).

### 5. Modification

The embodiment described above is one example, and various modifications and applications are possible. Hereinafter, modifications of the embodiment will be explained.

### 5-1. First Modification

In the embodiment described above, a case in which the information processing apparatus 100 estimates the time when the fish present in the fish cage become hungry from the stomach information, the water temperature information, and the digestibility information, and generates the control information indicating the timing for starting the feeding operation by the feeder device 10 based on the time when the fish present in the fish cage become hungry has been explained. In a first modification, a case in which the information processing apparatus 100 estimates an amount of feed to be provided to the fish present in the fish cage from the stomach information, the water temperature information, fish count information, and feed information, and generates control information indicating an amount of feed based on the amount of feed to be provided to the fish present in the fish cage will be explained.

The water temperature of the fish cage is estimated to have a correlation, for example, with flexibility of the stomach of the fish. That is, the temperature of the fish cage is estimated to have a correlation with an amount of feed digestible at a time by the fish. Moreover, by multiplying the size of the stomach of the fish present in the fish cage by the fish count, the maximum amount of feed that can be eaten by the fish present in the fish cage is calculated. Furthermore, feed more than the maximum amount of feed is considered to be wasted. Thus, in the first modification, the information processing apparatus 100 can accurately estimate the maximum amount of feed that can be eaten by the fish present in the fish cage based on the size of the stomach of the fish, the water temperature of the fish cage, the count of fish present in the fish cage, and the type of feed and feed provided by the feeder device 10. Moreover, because the information processing apparatus 100 can accurately estimate the maximum amount of feed that can be eaten by the fish present in the fish cage, for example, by making the amount of feed to be provided by the feeder device 10 less than the maximum amount, it is possible to estimate the amount of feed to be provided by the feeder device 10 accurately. Therefore, the information processing apparatus 100 can optimize the feeding by the feeder device 10.

Specifically, the acquiring unit 131 acquires the fish count information relating to the count of fish present in the fish cage. For example, the acquiring unit 131 acquires an image of a camera installed in the water in the fish cage. Subsequently, the acquiring unit 131 estimates the count of fish captured in the image by analyzing the image of the camera by using a publicly known image recognition technique. Moreover, the acquiring unit 131 estimates the fish count of the fish present in the fish cage based on the fish count of the fish captured in the image. Alternatively, the fish count of the fish present in the fish cage is known. The storage unit 120 stores the fish count information relating to the fish count of the fish, associating with information enabling to identify the fish cage. The acquiring unit 131 refers to the storage unit 120, and acquires the fish count information regarding the count of the fish present in the target fish cage. As described, the acquiring unit 131 acquires the fish count information regarding the count of fish present in a fish cage.

Moreover, the acquiring unit 131 acquires the feed information regarding a size and a type of feed and of feed to be provided by the feeder device 10. The storage unit 120 stores the feed information regarding the size of feed and the type of feed to be provided to the fish present in the fish cage, associating with information enabling to identify the fish cage. Moreover, suppose that the size of feed and the type of feed to be provided in the target fish cage are known. The acquiring unit 131 refers to the feed information in the storage unit 120, and acquires the feed information regarding the size of feed and the type of feed to be provided by the feeder device 10 to the fish present in the target fish cage.

Furthermore, the estimating unit 132 estimates an amount of feed to be provided to the fish present in the fish cage. Specifically, the estimating unit 132 trains a second machine learning model using a set of the stomach information, the water temperature information, the fish count information, and the feed information, and information indicating an amount of feed to be provided to the fish present in the fish cage (for example, a maximum amount of feed provided at a time to the fish present in the fish cage) as ground truth data. More specifically, the estimating unit 132 trains the second machine learning model to output information indicating the amount of feed as output information according to input of input information based on the stomach information, the water temperature information, the fish count information, and the feed information. Subsequently, the estimating unit 132 inputs the stomach information, the water temperature information, the fish count information, and the feed information acquired by the acquiring unit 131 to the trained second machine learning model, to acquire the information indicating the amount of feed output from the trained second machine learning model as an estimation result.

Furthermore, the feeding control unit 133 generates control information indicating the amount of feed to be provided by the feeder device 10 based on the information indicating the amount of feed estimated by the estimating unit 132. For example, suppose that the amount of feed estimated by the estimating unit 132 is the maximum amount of feed to be provided at a time to fish present in the fish cage. In this case, the feeding control unit 133 generates control information to instruct the amount of feed to be provided at a time by the feeder device 10 to be less than the estimated maximum amount (for example, 80% of the maximum amount) as the control information indicating the amount of feed to be provided by the feeder device 10. When the growth of the fish present in the fish cage is slow, and it is desired to make the fish grow faster, the feeding control unit 133 may generate control information to instruct the amount of feed to be provided at a time by the feeder device 10 to be more than the estimated maximum amount (for example, 120% of the maximum amount) as the control information indicating the amount of feed to be provided by the feeder device 10. The feeding control unit 133 transmits, when the control information is generated, the generated control information to the feeder device 10.

FIG. 4 is a flowchart illustrating an example of information processing performed by the information processing apparatus 100 according to the first modification. In the example illustrated in FIG. **4****,** the acquiring unit 131 acquires the stomach information, the water temperature information, the fish count information, and the feed information (step S201). Moreover, the estimating unit 132 estimates the amount of feed to be provided to the fish present in the fish cage from the stomach information, the water temperature information, the fish count information, and the feed information acquired by the acquiring unit 131 by using the second machine learning model (step S202). Moreover, the feeding control unit 133 generates the control information indicating the amount of feed to be provided by the feeder device 10 based on the information indicating the amount of feed estimated by the estimating unit 132 (step S203). Subsequently, the feeding control unit 133 transmits, when the control information is generated, the generated control information to the feeder device 10 (step S204).

### 5-2. Second Modification

In the embodiment described above, a case in which the information processing apparatus 100 estimates the time when the fish present in the fish cage become hungry from the stomach information, the water temperature information, and the digestibility information, and generates the control information indicating the timing for starting the feeding operation by the feeder device 10 based on the time when the fish present in the fish cage become hungry has been explained. In a second modification, a case in which the information processing apparatus 100 determines whether the feeding activity of fish is high based on sound information relating to sounds in a fish farming environment. Moreover, a case in which the information processing apparatus 100 generates, when it is determined that the feeding activity of fish is low, control information indicating timing for stopping the feeding operation by the feeder device 10 will be explained.

As described, in the second modification, the information processing apparatus 100 can accurately determine whether the feeding activity of fish is high based on sound in a fish farming environment. Moreover, because the information processing apparatus 100 can determine whether the feeding activity of fish is high accurately, it is possible to prevent overfeeding by stopping the feeding operation by the feeder device 10, for example, at the time when the feeding activity of fish is low (that is, when the fish are barely eating). Therefore, the information processing apparatus 100 can optimize feeding by the feeder device 10.

Specifically, the acquiring unit 131 acquires the sound information relating to sounds from a microphone that collects sounds in a fish farming environment. For example, the acquiring unit 131 acquires the sound information relating to sounds collected by a microphone arranged around the fish cage of in the fish cage. For example, the acquiring unit 131 acquires sound information relating to sound collected by the microphone arranged at a position within a predetermined range from the feeder device 10 installed in the fish cage.

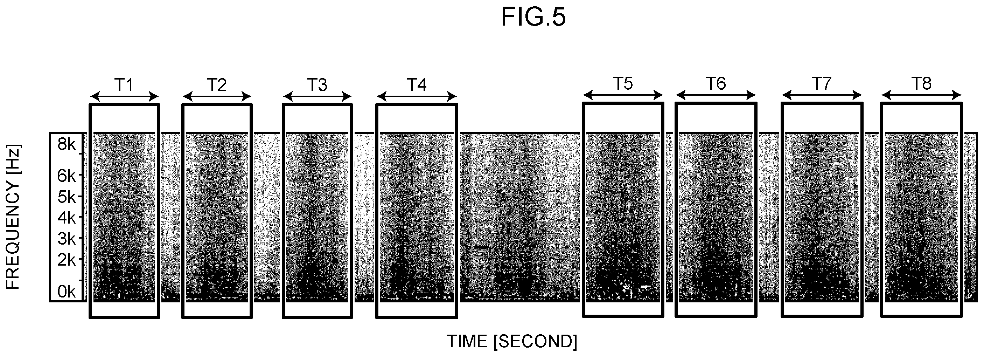

Moreover, the estimating unit 132 estimates whether the feeding activity of the fish is high based on the sound information. Specifically, the estimating unit 132 processes the sound information acquired by the acquiring unit 131 into a three-dimensional data that indicates frequency, sound intensity (also referred to as amplitude), and changes in frequency and sound intensity over time. For example, the estimating unit 132 generates a spectrogram as illustrated in FIG. 5 from the sound information acquired by the acquiring unit 131 using Short-Time Fourier Transform (STFT). FIG. 5 is a diagram illustrating an example of a spectrogram of sound collected during feeding according to the second modification. In a graph in FIG. 5, a vertical axis represents frequency and a horizontal axis represents time, and color intensity corresponds to sound intensity. In FIG. 5, it is indicated that as the color intensity increases, the sound intensity (that is, amplitude) increases. Respective time periods T1 to T8 in FIG. 5 are time periods in which fish are biting the feed and splashing sounds are caused on the water surface. That is, it is indicated that the time periods T1 to T8 in FIG. 5 are time periods in which the feeding activity of the fish is high.

For example, the estimating unit 132 determines whether the feeding activity of fish is high based on whether a state in which a sound volume (also referred to as sound intensity or amplitude) of a first frequency band is equal to or higher than a first threshold continues more than a first time period as the sound information. For example, the estimating unit 132 determines that the feeding activity of the fish is high when it is determined that a state in which the magnitude of the sound volume (also referred to as sound intensity or amplitude of sound) of the first frequency band (for example, a frequency band of 0 kilohertz to 2 kilohertz) is equal to or higher than the first threshold has continued for more than the first time period. On the other hand, the estimating unit 132 determines that the feeding activity of the fish is low when it is determined that the state in which the magnitude of the sound volume (also referred to as sound intensity or amplitude of sound)of the first frequency band (for example, a frequency band of 0 kilohertz to 2 kilohertz) is equal to or higher than the first threshold has not continued for the first time period.

Moreover, the feeding control unit 133 generates control information indicating timing for stopping the feeding operation by the feeder device 10 when it is determined that the feeding activity of the fish is low by the estimating unit 132. The feeding control unit 133 transmits, when the control information is generated, the generated control information to the feeder device 10.

Moreover, the estimating unit 132 determines whether the feeding activity is high based on a comparison between a shape of an envelope of a waveform of the frequency spectrum of the sound and a shape of an envelope of a waveform of the frequency spectrum of the sound when the feeding activity of the fish is high. More specifically, the estimating unit 132 trains a third machine learning model using information indicating the shape of the envelope of the waveform of the frequency spectrum of the sound when the feeding activity of the fish is high (or low) and information indicating that the feeding activity of the fish is high (or low) as ground truth data. For example, the estimating unit 132 trains the third machine learning model to output the information indicating that the feeding activity of the fish is high (or low) according to input of the input information based on the shape of the envelope of the waveform of the frequency spectrum of the sound when the feeding activity of the fish is high (or low) as output information. Subsequently, the estimating unit 132 inputs the information indicating the envelope of the waveform of the frequency spectrum of the sound generated from the sound information acquired by the acquiring unit 131 to the trained third machine learning model, and acquires the output result output from the trained third machine learning model as an estimation result. For example, the estimating unit 132 determines that the feeding activity of the fish is high when the information indicating that the feeding activity of the fish is high has been output for the first time period or longer, based on the output result output from the trained third machine learning model. On the other hand, the estimating unit 132 determines that the feeding activity of the fish is low when the information indicating that the feeding activity of the fish is high has not been output for the first time period or longer. Alternatively, the estimating unit 132 determines that the feeding activity of the fish is low when the information indicating that the feeding activity of the fish is low has been output for a second time period or longer.

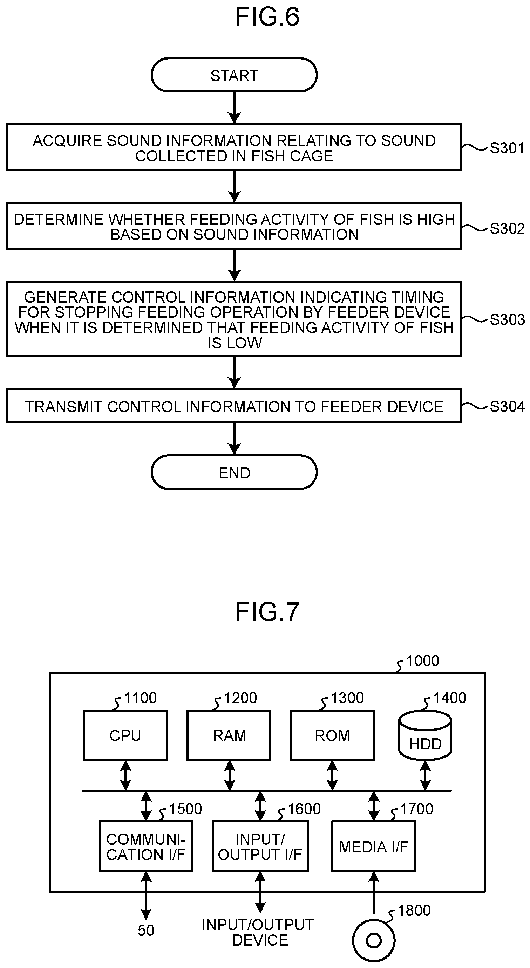

FIG. 6 is a flowchart illustrating an example of information processing performed by the information processing apparatus according to the second modification. In the example in FIG. 6, the acquiring unit 131 acquires the sound information relating to sounds collected in the fish cage (step S301). Moreover, the estimating unit 132 determines whether the feeding activity of the fish is high based on the sound information acquired by the acquiring unit 131 (step S302). Furthermore, the feeding control unit 133 generates the control information indicating timing for stopping the feeding operation by the feeder device when it is determined that the feeding activity of the fish is low by the estimating unit 132 (step S303). Subsequently, the feeding control unit 133 transmits, when the control information is generated, the generated control information to the feeder device 10 (step S304).

### 6. Hardware Configuration

Moreover, the information processing apparatus 100 according to the embodiments or the modifications described above is implemented by a computer 1000, for example, configured as illustrated in FIG. 7. FIG. 7 is a hardware configuration diagram illustrating an example of a computer that implements the functions of the information processing apparatus 100. The computer 1000 includes a CPU 1100, a RAM 1200, a ROM 1300, an HDD 1400, a communication interface (IO/F) 1500, an input/output interface (I/F) 1600, and a media interface (I/F) 1700.

The CPU 1100 operates based on a program stored in the ROM 1300 or the HDD 1400, and controls the respective components. The ROM 1300 stores a boot program, a program executed by the CPU 1100 at the time of activation of the computer 1000, a program dependent on hardware of the computer 1000, and the like.

The HDD 1400 stores a program executed by the CPU 1100, and data used by the program, and the like. The communication interface 1500 receives data from another device through a predetermined communication network to transmit to the CPU 1100, and transmits data generated by the CPU 1100 to other devices through a predetermined network.

The CPU 1100 controls an output device, such as a display and a printer, and an input device, such as a keyboard and a mouse, through the input/output interface 1600. The CPU 1100 acquires data from the input device through the input/output interface 1600. Moreover, the CPU 1100 outputs generated data to the output device through the input/output interface 1600.

The media interface 1700 reads a program or data stored in a storage medium 1800, to provide to the CPU 1100 through the RAM 1200. The CPU 1100 loads the program from the storage medium 1800 through the media interface 1700 to the RAM 1200, and executes the loaded program. The storage medium 1800 is, for example, an optical recording medium, such as a digital versatile disk (DVD) and a phase change rewritable disk (PD), an optical magnetic recording medium, such as a magneto-optical disk (MO), a tape medium, a magnetic recording medium, a semiconductor memory, and the like.

For example, when the computer 1000 functions as the information processing apparatus 100 according to the embodiment, the CPU 1100 of the computer 1000 executes the program loaded on the RAM 1200, thereby implementing the function of the control unit 130. The CPU 1100 of the computer 1000 reads these programs from the recording medium 1800 to execute, but as another example, it may acquire these programs from another device through a predetermined network.

As above, some embodiments of the present application has been explained in detail based on the drawings, but these are examples, and including the embodiments described in a section of disclosure of the invention, the present invention can be implemented in other forms with various modifications and improvements based on knowledge of those skilled in the art.

### 7. Others

Moreover, out of the respective processing explained in the above embodiments, all or some of processing explained to be performed automatically can also be performed manually, or all or some of processing explained to be performed manually can also be performed automatically by a publicly-known method. Besides, the procedure of processing, the specific names, and the information including various kinds of data and parameters described in the above document or in the drawings can be arbitrarily changed, unless otherwise specified. For example, the respective information illustrated in the respective drawings is not limited to the information illustrated.

Furthermore, the respective components of the respective devices illustrated are of functional concept, and it is not necessarily required to be configured physically as illustrated. That is, specific forms of distribution and integration of the respective devices are not limited to the ones illustrated, and all or some thereof can be configured to be distributed or integrated functionally or physically in arbitrary units according to various kinds of loads, usage conditions, and the like.

For example, the information processing apparatus 100 may be implemented by multiple server computers, and the configuration can be flexibly modified, such as by implementing functions by calling to an external platform via API or network computing.

Furthermore, the embodiments and the modifications can be combined within a range not causing a contradiction in processing.

### 8. Effect

As described above, the information processing apparatus 100 according to the embodiment includes the acquiring unit 131 and the feeding control unit 133. The acquiring unit 131 acquires the stomach information indicating the size of the stomach of fish present in a fish cage and water temperature information indicating water temperature of the fish cage. The feeding control unit 133 generates the control information to control the feeding operation by the feeder device 10 to the fish present in the fish cage based on the stomach information and the water temperature information.

Thus, the information processing apparatus 100 can accurately estimate, for example, a time when the fish present in the fish cage become hungry and an amount of feed to be provided to the fish present in the fish cage based on the size of the stomach and the water temperature of the fish cage. Therefore, the information processing apparatus 100 can optimize feeding by the feeder device 10. Moreover, because the information processing apparatus 100 can optimize feeding by the feeder device 10, it is possible to contribute to achievement of Sustainable Development Goals (SDGs) 14, "Life Below Water". Furthermore, because the information processing apparatus 100 can optimize feeding by the feeder device 10, it is possible to contribute to achievement of SDGs 9, "Industry, Innovation and Infrastructure".

Moreover, the information processing apparatus 100 further includes the estimating unit 132 that estimates a time when fish present in a fish cage become hungry. The acquiring unit 131 acquires the digestibility information that indicates a digestion rate of feed provided by the feeder device 10 of the fish present in the fish cage. The estimating unit 132 estimates the time when the fish present in the fish cage become hungry by using the first machine learning model trained to output information indicating a time when the fish present in the fish cage become hungry as output information according to input of input information based on the stomach information, the water temperature information, and the digestibility information. The feeding control unit 133 generates the control information indicating timing for starting the feeding operation based on the information indicating the time when the fish present in the fish cage become hungry.

The water temperature of the fish cage is estimated to have a correlation with, for example, the activity level of digestive enzymes contained in gastric juice of fish. That is, the water temperature of the fish cage is estimated to have a correlation with, for example, the digestion rate of feed. Thus, the information processing apparatus 100 can accurately estimate the time when the fish present in the fish cage become hungry based on the size of the stomach of the fish, the water temperature of the fish cage, and the digestion rate of feed. Moreover, because the information processing apparatus 100 can accurately estimate the time when the fish present in the fish cage become hungry, it is possible to determine timing for starting the feeding operation by the feeder device 10 accurately. Therefore, the information processing apparatus 100 can optimize feeding by the feeder device 10.

Moreover, the information processing apparatus 100 further includes the estimating unit 132 that estimates an amount of feed to be provided to fish present in a fish cage. The acquiring unit 131 acquires the fish count information relating to the count of fish present in the fish cage, and the feed information relating to a size of feed and a type of feed to be provided by the feeder device 10. The estimating unit 132 estimates an amount of feed by using the second machine learning model trained to output the information indicating an amount of feed as out put information according to input of input information based on the stomach information, the water temperature information, the fish count information, and the feed information. The feeding control unit 133 generates the control information indicating the amount of feed to be provided by the feeder device 10 based on the information indicating the amount of feed.

The water temperature of the fish cage is estimated to have a correlation with, for example, the flexibility of the stomach of the fish. That is, the water temperature of the fish cage is estimated to have a correlation with an amount of feed that can be digested by fish at a time. Moreover, by multiplying the size of the stomach of the fish present in the fish cage by the fish count of fish, the maximum amount of feed that can be provided to the fish present in the fish cage is calculated. Furthermore, feeding more than the maximum amount of feed is considered wasteful. Thus, the information processing apparatus 100 can accurately estimate the maximum amount of feed that can be provided to the fish present in the fish cage based on the size of the stomach of the fish, the water temperature of the fish cage, the fish count of the fish present in the fish cage, and the type of feed and of feed provided by the feeder device 10. Furthermore, because the information processing apparatus 100 can accurately estimate the maximum amount of feed that can be provided to the fish present in the fish cage, for example, by making the amount of feed to be provided by the feeder device 10 less than the maximum amount, it is possible to estimate the amount of feed to be provided by the feeder device 10 appropriately. Therefore, the information processing apparatus 100 can optimize feeding by the feeder device 10.

Moreover, the acquiring unit 131 acquires sound information relating to sound from a microphone that collects sounds in a fish farming environment. The estimating unit 132 determines whether the feeding activity of fish is high based on the sound information. The feeding control unit 133 generates the control information indicating timing for stopping the feeding operation by the feeder device 10 when it is determined that the feeding activity of the fish is low by the estimating unit 132.

Thus, the information processing apparatus 100 can accurately determine whether the feeding activity of the fish is high based on sounds in the fish farming environment. Moreover, because the information processing apparatus 100 can appropriately determine whether the feeding activity of the fish is high, for example, it is possible to prevent overfeeding by stopping the feeding operation by the feeder device 10 at the time when the feeding activity of fish is low (that is, when the fish are barely eating). Therefore, the information processing apparatus 100 can optimize feeding by the feeder device 10.

Moreover, the estimating unit 132 determines whether the feeding activity of fish is high based on whether a state in which the volume of sound of the first frequency band is equal to or higher than the first threshold has continued for the first time period or longer as the sound information.

Thus, the information processing apparatus 100 can determine that the feeding activity of fish is low when the sound at the time when the feeding activity of the fish is high does not continue for a predetermined time or longer.

Furthermore, the estimating unit 132 determines whether the feeding activity of fish is high based on a comparison between a shape of an envelope of a waveform of the frequency spectrum of the sound and a shape of an envelope of a waveform of the frequency spectrum of the sound when the feeding activity of the fish is high as the sound information.

Thus, the information processing apparatus 100 can determine that the feeding activity of the fish is high when the shape of the envelope of the waveform of the frequency spectrum of the sound is similar to the shape of the envelope of the waveform of the frequency spectrum of the sound at the time when the feeding activity of the fish is high.

### Reference Signs List

- 1: INFORMATION PROCESSING SYSTEM
- 10: FEEDER DEVICE
- 100: INFORMATION PROCESSING APPARATUS
- 110: COMMUNICATION UNIT
- 120: STORAGE UNIT
- 130: CONTROL UNIT
- 131: ACQUIRING UNIT
- 132: ESTIMATING UNIT
- 133: FEEDING CONTROL UNIT

## Claims

1. An information processing apparatus comprising:
an acquiring unit that acquires stomach information indicating a size of stomach of fish present in a fish cage, and water temperature information indicating water temperature of the fish cage; and
a feeding control unit that generates control information for controlling feeding operation by a feeder device to the fish present in the fish cage based on the stomach information and the water temperature information.

2. The information processing apparatus according to claim 1, further comprising
an estimating unit that estimates a time when fish present in the fish cage become hungry, wherein
the acquiring unit acquires digestibility information indicating a digestion rate of feed provided by the feeder device of the fish present in the fish cage,
the estimating unit estimates a time when the fish present in the fish cage become hungry by using a first machine learning model that is trained to output information indicating a time when the fish present in the fish cage become hungry as output information according to input of input information based on the stomach information, the water temperature information, and the digestibility information, and
the feeding control unit generates the control information indicating timing for starting the feeding operation based on the information indicating the time when the fish present in the fish cage become hungry.

3. The information processing apparatus according to claim 1, further comprising
an estimating unit that estimates an amount of feed to be provided to the fish present in the fish cage, wherein
the acquiring unit acquires fish count information relating to fish count of the fish present in the fish cage, and feed information relating to a size of feed and a type of feed provided by the feeder device,
the estimating unit estimates an amount of the feed by using a second machine learning model that is trained to output information indicating an amount of the feed as output information according to input of input information based on the stomach information, the water temperature information, the fish count information, and the feed information, and
the feeding control unit generates the control information indicating the amount of feed to be provided by the feeder device based on the information indicating the amount of feed.

4. An information processing method that is implemented by a computer program, comprising:
an acquiring step of acquiring stomach information indicating a size of stomach of fish present in a fish cage, and water temperature information indicating water temperature of the fish cage; and
a feeding control step of generating control information to control feeding operation by a feeder device to the fish present in the fish cage based on the stomach information and the water temperature information.

5. An information processing program that causes a computer to execute:
an acquiring step of acquiring stomach information indicating a size of stomach of fish present in a fish cage, and water temperature information indicating water temperature of the fish cage; and
a feeding control step of generating control information to control feeding operation by a feeder device to the fish present in the fish cage based on the stomach information and the water temperature information.

6. An information processing apparatus comprising:
an acquiring unit that acquires sound information relating to sounds from a microphone collecting the sound in a fish farming environment;
an estimating unit that determined whether feeding activity of the fish is high based on the sound information; and
a feeding control unit that generates control information indicating timing for stopping feeding operation by a feeder device when it is determined that the feeding activity of the fish is low by the estimating unit.

7. The information processing apparatus according to claim 6, wherein
the estimating unit determines whether the feeding activity of the fish is high based on whether a state in which a volume of a sound of a first frequency band is equal to or higher than a first threshold continues for a first time period or longer as the sound information.

8. The information processing apparatus according to claim 6, wherein
the estimating unit determines whether the feeding activity of the fish is high based on a comparison between a shape of an envelope of a waveform of the frequency spectrum of the sound and a shape of an envelope of a waveform of the frequency spectrum of the sound at a time when the feeding activity of the fish is high.
